# EUROPÄISCHE PATENTSCHRIFT

(11) **EP 0 603 546 B1**
(45) Veröffentlichungstag und Bekanntmachung des Hinweises auf die Patenterteilung: **08.04.1998**
(21) Anmeldenummer: 93118591.2
(22) Anmeldetag: 18.11.1993
(51) Int. Cl.: C08J 3/22, C09D 17/00, C09B 67/20

(54) **Pigment- und Russpasten zum Färben von Kunststoffen**
Pigment and carbon black pastes for dyeing of plastics
Pâtes pigmentaire ou de noir de carbone pour la coloration de matières plastiques

(30) Priorität: 02.12.1992 DE 4240481
(43) Veröffentlichungstag der Anmeldung: 29.06.1994
(73) Patentinhaber: BAYER AG, 51368 Leverkusen (DE)
(72) Erfinder: Runde, Hans-Jürgen, Dipl.-Ing., D-51381 Leverkusen (DE); Pape, Georg, Dr., D-51381 Leverkusen (DE); Kressner, Michael, Dipl.-Ing., D-42789 Leichlingen (DE); Schuffenhauer, Erhard, D-31373 Leverkusen (DE)

(56) Entgegenhaltungen:
- EP-A- 0 074 080
- DE-A- 2 901 774
- FR-A- 2 261 327
- FR-A- 2 314 224
- TASCHENBUCH DER KUNSTSTOFF-ADDITIVE, R.Gächter und H.Müller Carl Hanser Verlag 1982 München, S.526-527
- KUNSTSTOFF- LEXIKON, K.Stoeckhert, Carl Hanser Verlag 1981 München, S.360-361
- LEHRBUCH DER LACKE UND BESCHICHTUNGEN, H.Kittel, W.A.Colomb Verlag, 1974 Berlin, S.218,219,228-233

## Beschreibung

Die Erfindung betrifft Pigment- und/oder rußhaltige Pasten, ihre Herstellung sowie Verfahren zum Pigmentieren von organischem makromolekularem Material, insbesondere Kunststoffen auf Polyurethan-Basis.

Polyurethane als Lackbindemittel oder Beschichtungsmaterial, z.B. für Textilien, werden in einer breiten Palette als Ein- oder Zweikomponenten-Systeme, hochelastisch oder hart, lösungsmittelfrei oder lösungsmittelhaltig hergestellt. Sofern diese Materialien pigmentiert werden, stellt sich das Problem, einen geeigneten Pigmentträger zu finden, in dem die Pigmente hochkonzentriert flockungsfrei dispergiert werden können und der mit den verschiedenartigen Polyurethanen verträglich ist, um nicht für jedes spezielle System eine spezielle Pigmentpaste bereithalten zu müssen. Bei den in der Lackindustrie gebräuchlichen Zweikomponenten-Systemen steht für die Pigmentierung zumeist nur die relativ niedrigviskose Polyolkomponente zur Verfügung, in der nicht nur Ruß oder organische Pigmente wie Phthalocyanine, sondern auch anorganische Pigmente wie Eisenoxidgelb oder Eisenoxidrot nicht ohne Flockungs- und Thixotropieerscheinungen zu dispergieren sind. Das macht zunächst jede Anreibung problematisch und unwirtschaftlich, wirkt sich aber nach Zusatz der Isocyanat-Komponente noch negativ auf Verlauf, Glanz, Farbtiefe, Deckfähigkeit und Glanzhaltung der ausgehärteten Lackfilme aus.

In den Polyurethan-Beschichtungsmaterialien für Textilien liegen sehr hochmolekulare Körper vor, die untereinander nur begrenzt mischbar sind (Ein- oder Zweikomponenten-Systeme) und schon allein aus Viskositätsgründen keine hohen Pigmentkonzentrationen erlauben.

Neben diesen homogenen Polyurethanen haben zellförmige Polyurethane große Bedeutung erlangt, die hinsichtlich ihrer Elastizität von harten zu extrem weichen Schaumstoffen variieren können. Die Anfärbung dieser Schaumstoffe geschieht in der Hauptsache kurz vor der Verschäumung in einem Mischkopf, in dem Polyole und Polyisocyanate in Gegenwart von Hilfsstoffen mit Farbpasten innig vermischt werden. Als Bindemittel enthalten solche Farbpasten zumeist Polyester- oder Polyether-Polyole, deren Pigmentaufnahmevermögen insbesondere gegenüber Ruß so niedrig ist, daß bei Rußkonzentrationen von 10 - 18 % bereits hochviskose Farbpasten vorliegen. Bei einer normalen Zudosierung der Farbpasten von 3 bis 5 %, die noch ohne großen Einfluß auf das mechanische Verhalten der Schaumstoffe ist, wird keine tiefe Anfärbung erreicht, sondern z.B. im Falle des Rußes nur eine graue Färbung.

Voraussetzung für die Dosierung ist eine gut pumpbare Farbpaste mit einem möglichst hohen Farbmittelanteil, um den Einfluß auf das mechanische Verhalten der Schaumstoffe durch das Anpastungsmittel klein zu halten.

Auch bei der Herstellung der Pasten spielt die Viskosität eine große Rolle, da hochviskose Pasten nur auf Walzenstühlen oder Knetern herstellbar sind. Die kontinuierliche Herstellung auf Perlmühlen ist bei hochviskosen Pasten nicht möglich.

Als Zusätze zur Reduzierung der Viskosität solcher Pasten sind aus der Patentliteratur z.B. Polyvinylpyrrolidon (DE-A-3 115 651), carbodiimidgruppenhaltige Urethane (DE-A-2 402 839), isoharnstoffgruppenhaltige Urethanharze (EP-A-27 907) und ein Copolymer aus einem α-Olefin und einem α,β-ungesättigten Dicarbonsäureester (DE-A-3 803 810) bekannt. Die Nachteile dieser Zusätze sind einerseits, daß sie keine genügend hohe Pigmentkonzentration zulassen oder andererseits, daß sie meist nur bei einem Pigment oder nur bei einer Kombination aus Pigment und Polyester- oder Polyetherpolyol wirken.

Gemäß EP-A-74080 wird ein Verfahren zur Herstellung von additivierten Polyurethanen beschrieben, wobei als Additiv Hydroxyalkylimidazoline verwendet werden, die ggf. durch Reste natürlicher Fettsäuren substituiert sind.

Es wurde nun gefunden, daß die aufgezeigten Schwierigkeiten überwunden werden können, wenn als Pigmentträger in Gegenwart von pflanzlichen Ölen hergestellte Polyurethane eingesetzt werden.

Die Erfindung betrifft demnach Pigmentpasten enthaltend die Komponenten
a) ein Pigment und/oder Ruß,
b) ein in Gegenwart von pflanzlichen Ölen hergestellte Polyurethan als ölmodifiziertes Polyurethan und
c) Polyetherpolyole, Polyesterpolyole und/oder nicht polyhydroxyfunktionelle Dicarbonsäuren als Anpastungsmittel.

Die erfindungsgemäßen Pigmentpasten enthalten bevorzugt
10 - 80 Gew.-Teile Pigment und/oder Ruß,
10 - 80 Gew.-Teile Anpastungsmittel und
0,5 - 50 Gew.-Teile ölmodifiziertes Polyurethan.

In einer besonders bevorzugten Ausführungsform enthalten die erfindungsgemäßen Pigmentpasten
10 - 50 Gew.-Teile organisches Pigment oder Ruß,
0,5 - 30 Gew.-Teile, insbesondere
10 - 20 Gew.-Teile ölmodifiziertes Polyurethan
10 - 80 Gew.-Teile, insbesondere
20 - 80 Gew.-Teile Anpastungsmittel,
oder
15 - 80 Gew.-Teile anorganisches Pigment,
0,5 - 30 Gew.-Teile, insbesondere
10 - 20 Gew.-Teile ölmodifiziertes Polyurethan.
10 - 80 Gew.-Teile, insbesondere
20 - 80 Gew.Teile Anpastungsmittel

Die Pigmente, die in den Pigmentpasten enthalten sind, unterliegen keiner Beschränkung. Sie können organischer oder anorganischer Natur sein. Geeignete organische Pigmente sind z.B. solche der Azo-, Anthrachinon-, Thioindigo-Reihe, ferner andere polycyclische Pigmente, z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von sulfonsäure- und/oder carbonsäuregruppenhaltigen Farbstoffen, sowie Ruß, von denen eine große Zahl beispielsweise aus Colour-Index, 2. Auflage, bekannt ist. Geeignete anorganische Pigmente sind beispielsweise Zinksulfide, Ultramarin, Titandioxide, Eisenoxide, Nickel- oder Chromantimontitandioxide, Kobaltblau, Chromoxide und Chromatpigmente. Vorzugsweise wird Ruß eingesetzt.

Besonders bevorzugte Pigmente der erfindungsgemäßen Pigmentpasten sind Kupferphthalocyaninpigmente, z.B. Pigment Blue 15, Pigment Green 7, Arylamid-Pigmente vom Disazo-Typ, z.B. Pigment Yellow 83, Pigment Yellow 17, sowie Carbon Black, Zinksulfide und Ultramarine.

Ganz besonders bevorzugt sind Ruße mit einer BET-Oberfläche von 80-230 m²/g.

Polyetherpolyole und Polyesterpolyole als Anpastungsmittel sind bspw. solche, wie sie z.B. als Aufbaukomponenten für Polyurethane bekannt sind.

Nicht polyhydroxyfunktionelle Dicarbonsäureester als Anpastungsmittel sind insbesondere Adipin- und Phthalsäureester.

Besonders bevorzugt sind Polyetherpolyole, hergestellt durch Anlagerung von Ethylenoxid und/oder Propylenoxid an ein Polyol (s. z.B. DE-A-3 115 651).

Bevorzugte pflanzliche Öle sind beispielsweise Leinöl, Palmöl, Kokosöl oder Ricinusöl.

Besonders bevorzugt ist Leinöl, insbesondere solches mit einer Säurezahl von 5 bis 10, einer Jodzahl <20 sowie einer Viskosität von 1 000 bis 15 000 mPa.s bei 23°C.

Das als Zahlenmittel bestimmte mittlere Molekulargewicht des ölmodifizierten Polyurethans beträgt vorzugsweise 500 - 2000, insbesondere 800 -1300. Die Viskosität liegt vorzugsweise bei 2000 bis 10.000 mPa.s, insbesondere bei 3000 - 4000 mPa.s bei 23°C, D = 7,3 s⁻¹.

Als Edukt für die Polyurethanherstellung kann als Alkoholkomponente ein- oder mehrwertige Alkohole vorzugsweise mit bis zu 8 OH-Gruppen vorzugsweise aliphatische C₂-C₈-Alkohole und/oder Polyetherpolyole oder Polyesterpolyole und als Isocyanatkomponente Polyisocyanate eingesetzt werden.

Als einwertige Alkohole kommen z.B. Ethanol, Propanol, Isopropanol, Butanol, Pentanol, Octanol und ihre Isomere sowie Ethylenglykolmonoether, Di- und Polyethylenglykolmonoether in Frage.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 2-Methyl-1,3-propandiol, Glycerin, Trimethylolpropan, Hexantriol-(1,2,6), Butantriol-(1,2,4), Trimethylolethan, Pentaerythrit, Chinit, ferner Diethylenglykol, Triethylenglykol, Tetraethylenglykol, Polyethylenglykole, Dipropylenglykole, Polypropylenglykole, Dibutylenglykole und Polybutylenglykole in Frage, ganz besonders bevorzugt ist Pentaerythrit.

Bevorzugte Isocyanate sind aliphatische vorzugsweise C₃-C₉- oder aromatische vorzugsweise C₈-C₂₄-Polyisocyanate. Ganz besonders bevorzugt sind Toluylendiisocyant und Hexamethylendiisocyanat insbesondere Toluylendiisocyanat.

Besonders bevorzugt sind ölmodifizierte Polyurethane, die durch Umsetzung von mehrwertigen Alkoholen mit Polyisocyanaten in Gegenwart eines Katalysators, vorzugsweise basisch, in einem Leinöl hergestellt werden.

Ganz besonders bevorzugte ölmodifizierte Polyurethane werden auf der Basis von Pentaerythrit und Toluylendiisocyanat und/oder Hexamethylendiisocyanat erhalten.

Neben den genannten Komponenten können die erfindungsgemäßen Pasten weitere, für Pigment- oder Rußpasten übliche Bestandteile enthalten. Als solche seien beispielhaft genannt: Verdünnungsmittel, wie Tributylphosphat, Glykolether, Glycerinether, Stabilisatoren, Konservierungsmittel.

Die erfindungsgemäßen Pigmentpasten können in üblichen Naßzerkleinerungsaggregaten hergestellt werden, wie Kneter, Attritoren, Walzenstühlen, Dissolver, Rotor-Stator-Mühlen, Kugelmühlen und mit besonderem Vorteil in schnell laufenden Rührwerksmühlen mit Umlaufgeschwindigkeiten von 5 - 60 m/sec., bevorzugt 10 - 20 m/sec., die Mahlkörper in der Größe von etwa 0,1 - 10 mm Durchmesser, bevorzugt 0,5 - 2 mm, aus Stahl, Glas, Keramik, Sand oder Kunststoff enthalten.

Die Erfindung betrifft weiterhin ein Verfahren zum Pigmentieren von organischem, makromolekularem Material, insbesondere von Polyurethan-Schaumstoffen, das dadurch gekennzeichnet ist, daß man die beschriebenen Pasten für die Einfärbung solcher Materialien, insbesondere von Polyurethan-Schaumstoffen verwendet.

Dabei wird die erfindungsgemäße Präparation beispielsweise vor oder während der Polyurethanbildung entweder Polyol oder der Polyisocyanatkomponente oder deren Reaktionsgemisch zugesetzt.

Die weitere Reaktion wird in üblicher Weise, d.h. wie für nichtpigmentierte Polyurethankunststoffe durchgeführt. Angaben dazu sind beispielsweise G. Oertel, Kunststoff-Handbuch, Bd. 7, Polyurethane, Hanser, München, Wien 1983, engl. Ausgabe 1985 zu entnehmen.

Die Anfärbung der Polyurethan-Schaumstoffe geschieht vorzugsweise kurz vor der Verschäumung in einem Mischkopf, in dem die Polyole und Polyisocyanate in Gegenwart von Hilfsstoffen mit den Pasten innig vermischt werden.

Die Prozentangaben der nachfolgenden Beispiele bedeuten Gewichtsprozente, Teile bedeuten Gewichtsteile.

### Beispiel 1

### Herstellung von ölmodifiziertem Polyurethan

100 Teile eines Leinöls mit einer Säurezahl von 5, einer Jodzahl < 20 sowie einer Viskosität von etwa 5000 mPa.s (23°C, D = 7,3s⁻¹) (siehe bspw. Karsten, Lackrohstofftabelle, 8. Aufl., Vincentz Verlag, Hannover) werden mit 9 Teilen Pentaerythrit und 0.005 Teilen LiOH als Katalysator unter Stickstoff umgesetzt. Während drei Stunden wird eine konstante Temperatur von 200°C beibehalten. Nach dieser Reaktionszeit wird auf 100°C abgekühlt.

Anschließend werden 20 Teile eines Gemisches von 80 % 2,4- und 20 % 2,6-Toluylendiisocyanat zugegeben und die Temperatur vier Stunden bei 100°C gehalten. Die Reaktion ist beendet, wenn ein NCO-Gehalt < 0,5 % und einer Säurezahl < 0,5 erreicht ist.

Die Viskosität liegt bei etwa 5000 mPa.s (23°C, D = 7,3 s⁻¹).

### Beispiel 2

Eine schwarze Farbstoffpräparation aus 20 g Farbruß mit einer BET-Oberfläche von 200 m²/g, 10 g Tri-n-butylphosphat, 3 g eines ölmodifizierten Polyurethans aus Beispiel 1 und 67 g eines Polyesters, der ein Umsetzungsprodukt aus Phthalsäure, Triethylenglykol und Isononylalkohol ist und eine OH-Zahl von 300 - 320 besitzt wird wie folgt hergestellt:

Über Dosieraggregate werden Ruß, Tri-n-butylphosphat, das urethanisierte Lackleinöl und der Polyester in eine schnellaufende, mit Stahlperlen beschickte, kontinuierlich arbeitende Rührwerksmühle eingetragen. Man erhält eine fließfähige Farbpaste mit einer Viskosität von etwa 4000 mPa.s, (23°C, D = 7,3s⁻¹) die für die Einfärbung von Polyurethan-Schaum geeignet ist, die Molmasse des verwendeten Polyesters liegt im Bereich von 400 - 600 g/mol; seine Viskosität bei 200 - 250 mPa.s bei 20°C.

Wird eine analoge Präparation ohne das ölmodifizierte Polyurethan hergestellt, so ist ihre Viskosität so hoch, daß eine Herstellung in der Perlmühle nicht möglich ist.

### Beispiel 3

In 70 g einer 10 %igen Lösung des ölmodifizierten Polyurethans aus Beispiel 1 in einem Polyester mit der OH-Zahl 65, der ein Umsetzungsprodukt aus Adipinsäure und Propandiol-1,2 ist, werden 30 g eines anoxidierten Farbrußes mit einer BET-Oberfläche von 180 m²/g auf einem Schüttelgerät mit Hilfe von Glaskugeln von 3 mm Durchmesser innerhalb von 30 Minuten dispergiert. Man erhält eine sehr gut fließfähige Rußpaste mit einer Viskosität von etwa 5000 mPa.s bei 23°C, (D = 7,3s⁻¹), die sich durch eine hohe Flockungsstabilität auszeichnet. Sie ist besonders für die Anfärbung von Polyurethanschäumen auf Esterbasis geeignet.

### Beispiel 4

In 75 g einer 5 %igen Lösung des ölmodifizierten Polyurethans aus Beispiel 1 in einem Polyether mit der OH-Zahl 30, der ein Umsetzungsprodukt aus Trimethylolpropan und Ethylenoxid ist, werden 25 g eines Farbrußes mit einer BET-Oberfläche von 100 m²/g in einer kontinuierlich arbeitenden Rührwerksmühle mit 2 mm Stahlperlen innerhalb von 30 Minuten formiert. Man erhält eine sehr gut fließfähige Rußpaste mit einer Viskosität von etwa 6000 mPa.s bei 23°C, (D = 7,3s⁻¹), die sich durch eine hohe Flockungsstabilität auszeichnet. Sie ist besonders für die Anfärbung von Polyurethanschäumen auf Etherbasis geeignet.

### Beispiel 5

5 g des ölmodifizierten Polyurethans werden in einem Gemisch gelöst, das 45 g eines Polyesters, hergestellt aus Adipinsäure und Propandiol-1,2 und 15 g eines Polyesters, hergestellt aus Phthalsäure, Triethylenglykol und Isononylalkohol, sowie 10 g Tributylphosphat enthält. Die Lösung wird mit 25 g eines Farbrußes angeschlagen, der eine BET-Oberfläche von 150 m²/g hat. Die erhaltene Paste wird in einer kontinuierlich arbeitenden, mit 2 mm Glasperlen beschickten Rührwerkskugelmühle zu einer gut fließfähigen Farbpaste mit einer Viskosität von etwa 4000 mPa.s bei 23°C, (D = 7,3s⁻¹) formiert, die für die Einfärbung von Polyurethan-Schaum geeignet ist.

### Beispiel 6

10 g des ölmodifizierten Polyurethans aus Beispiel 1 werden mit 60 g eines Polyethers, hergestellt aus Trimethylolpropan und einer Mischung aus Propylenoxid und Ethylenoxid, verrührt. Diese Mischung wird mit 30 g eines Farbrußes mit einer BET-Oberfläche von 130 m²/g versetzt und in einer kontinuierlich arbeitenden Rührwerksmühle mit 2 mm Stahlperlen innerhalb von 30 Minuten formiert.

Man erhält eine sehr gut fließfähige Pigmentpaste mit einer Viskosität von etwa 7000 mPa.s bei 23°C (D = 7,3s⁻¹), mit der in Polyetherurethan-Schaumstoffen eine hohe Farbtiefe erreicht wird, indem man eine Mischung aus 200 g eines Polyethers aus Trimethylolpropan und Ethylenoxid mit der OH-Zahl 45 und 87,2 g eines Gemisches aus 80 % 2,4- und 20 % 2,6-Toluylendiisocyanat mit 10 g der Rußpaste versetzt und das Gemisch durch den Zusatz von Wasser und Hilfsmitteln zur Schaumbildung bringt.

### Beispiel 7

5 g des ölmodifizierten Polyurethans aus Beispiel 1 werden mit 80 g eines Polyesters, hergestellt aus Phthalsäure, Triethylenglykol und Isononylalkohol, verrührt. Diese Mischung wird mit 15 g Kupferphthalocyanin der α-Modifikation (Pigment Green 7) versetzt und in einer kontinuierlich arbeitenden Rührwerksmühle mit 2 mm Stahlperlen formiert.

Man erhält eine sehr gut fließfähige Pigmentpaste mit einer Viskosität von etwa 7000 mPa.s bei 23°C (D = 7,3s⁻¹) , mit der in Polyesterurethan-Schaumstoffen eine hohe Farbtiefe erreicht wird, indem man eine Mischung aus 200 g eines Polyesters aus Adipinsäure, Diethylenglykol und Trimethylolpropan mit der OH-Zahl 50 und 73,2 g eines Gemisches aus 65 % 2,4-und 35 % 2,6-Toluylendiisocyanat mit 5 g der grünen Pigmentpaste versetzt und das Gemisch durch den üblichen Zusatz von Wasser und Hilfmitteln zur Schaumbildung bringt.

### Beispiel 8

10 g des ölmodifizierten Polyurethans aus Beispiel 1 werden in 70 g eines verzweigten Polyethers mit einem mittleren Molgewicht von 4800, der durch Umsetzung von 1 Teil Trimethylolpropan mit einer Mischung aus 87 Teilen Propylenoxid und 13 Teilen Ethylenoxid erhalten wird, eingerührt. In diese Lösung werden 20 g eines Rußes mit einer BET-Oberfläche von 230 m²/g eingerührt und in einer Perlmühle zu einer fließfähigen Rußpaste mit einer Viskosität von etwa 8000 mPa.s bei 23°C, (D = 7,3s⁻¹) dispergiert. Diese Paste ist sehr gut für die Formverschäumung geeignet, bei der als Polyisocyanatkomponente Diphenylmethandiisocyanat-(4,4') verwendet wird.

## Patentansprüche

1. Pigmentpasten enthaltend die Komponenten
a) ein Pigment und/oder Ruß,
b) ein in Gegenwart von pflanzlichen Ölen hergestelltes Polyurethan als ölmodifiziertes Polyurethan und
c) Polyetherpolyole, Polyesterpolyole und/oder nicht polyhydroxyfunktionelle Dicarbonsäureester als Anpastungsmittel.

2. Pigmentpasten gemäß Anspruch 1, enthaltend
a) 10 bis 80 Gew.-Teile Pigment und/oder Ruß,
b) 0,05 bis 50 Gew.-Teile ölmodifiziertes Polyurethan und
c) 10 bis 80 Gew.-Teile Anpastungsmittel.

3. Pigmentpasten gemäß Anspruch 1 oder 2, enthaltend
10 bis 50 Gew.-Teile organisches Pigment oder Ruß,
0,5 bis 30 Gew.-Teile ölmodifiziertes Polyurethan und
10 bis 80 Gew.-Teile Anpastungsmittel
oder
15 bis 80 Gew.-Teile anorganisches Pigment,
0,5 bis 30 Gew.-Teile ölmodifiziertes Polyurethan und
10 bis 80 Gew.-Teile Anpastungsmittel.

4. Pigmentpasten gemäß einem der Ansprüche 1 bis 3, enthaltend Ruß als Pigment.

5. Pigmentpasten gemäß wenigstens einem der Ansprüche 1 bis 4, enthaltend als Anpastungsmittel wenigstens ein Polyetherpolyol und/oder Polyesterpolyol.

6. Pigmentpasten nach wenigstens einem der vorherigen Ansprüche 1 bis 5, enthaltend als ölmodifiziertes Polyurethan ein in Leinöl hergestelltes Polyurethan.

7. Pigmentpasten nach wenigstens einem der vorherigen Ansprüche 1 bis 6, enthaltend ein ölmodifiziertes Polyurethan mit einer Viskosität von 2000 bis 10.000 mPa.s bei 23°C, D = 7,3 s⁻¹.

8. Pigmentpasten gemäß wenigsten einem der Ansprüche 1 bis 7, enthaltend ein ölmodifiziertes Polyurethan auf der Basis von Toluylendiisocyanat und/oder Hexamethylendiisocyanat als Isocyanatkomponente und Pentaerythrit als Alkoholkomponente.

9. Verfahren zum Pigmentieren von organischen makromolekularen Materialien, dadadurch gekennzeichnet, daß man eine Pigmentpasten enthaltend die Komponenten a), b) und c) gemäß Anspruch 1 verwendet.

10. Verfahren gemäß Anspruch 9, zum Pigmentieren von Polyurethanen.

## Claims

1. Pigment pastes comprising the components.
a) a pigment and/or carbon black,
b) a polyurethane produced in the presence of vegtable oils as the oil-modified polyurethane and
c) polyether-polyols, polyester-polyols and/or dicarboxylates which are not polyhydroxy-functional as the paste-formulating agent.

2. Pigment pastes according to Claim 1, comprising
a) 10 to 80 parts by weight of pigment and/or carbon black,
b) 0.05 to 50 parts by weight of oil-modified polyurethane and
c) 10 to 80 parts by weight of paste-formulating agent.

3. Pigment pastes according to Claim 1 or 2, comprising
10 to 50 parts by weight of organic pigment or carbon black,
0.5 to 30 parts by weight of oil-modified polyurethane and
10 to 80 parts by weight of paste-formulating agent
or
15 to 80 parts by weight of inorganic pigment,
0.5 to 30 parts by weight of oil-modified polyurethane and
10 to 80 parts by weight of paste-formulating agent.

4. Pigment pastes according to one of Claims 1 to 3, comprising carbon black as the pigment.

5. Pigment pastes according to at least one of Claims 1 to 4, comprising at least one polyether-polyol and/or polyester-polyol as the paste-formulating agent.

6. Pigment pastes according to at least one of the preceding Claims 1 to 5, comprising a polyurethane produced in linseed oil as the oil-modified polyurethane.

7. Pigment pastes according to at least one of the preceding Claims lto 6, comprising an oil-modified polyurethane having a viscosity of 2000 to 10 000 mPa.s at 23°C, D = 7.3 s⁻¹.

8. Pigment pastes according to at least one of Claims 1 to 7, comprising an oil-modified polyurethane based on toluylene diisocyanate and/or hexamethylene diisocyanate as the isocyanate component and pentaerythritol as the alcohol component.

9. Process for pigmenting organic macromolecular materials, characterized in that a pigment paste comprising components a), b) and c) according to Claim 1 is used.

10. Process according to claim 9, for pigmenting polyurethanes.

## Revendications

1. Pâtes pigmentaires contenant les composants suivants :
a) un pigment et/ou du noir de carbone,
b) un polyuréthane préparé en présence d'huiles végétales, constituant un polyuréthane modifié par une huile et
c) des polyétherpolyols, des polyesterpolyols et/ou des esters d'acides dicarboxyliques, à l'exception des acides dicarboxyliques polyhydroxyfonctionnels, en tant qu'agents d'empâtage.

2. Pâtes pigmentaires selon revendication 1, qui contiennent
a) 10 à 80 parties en poids de pigment et/ou de noir de carbone,
b) 0,05 à 50 parties en poids du polyuréthane modifié par une huile et
c) 10 à 80 parties en poids d'agents d'empâtage.

3. Pâtes pigmentaires selon revendication 1 ou 2, contenant
10 à 50 parties en poids de pigment organiques ou de noir de carbone,
0,5 à 30 parties en poids de polyuréthane modifié par une huile et
10 à 80 parties en poids d'agents d'empâtage,
ou bien
15 à 80 parties en poids d'un pigment minéral,
0,5 à 30 parties en poids d'un polyuréthane modifié par une huile et
10 à 80 parties en poids d'agents d'empâtage.

4. Pâtes pigmentaires selon une des revendications 1 à 3, contenant du noir de carbone en tant que pigment.

5. Pâtes pigmentaires selon au moins une des revendications 1 à 4 contenant au moins un polyétherpolyol et/ou polyesterpolyol en tant qu'agent d'empâtage.

6. Pâtes pigmentaires selon au moins une des revendications qui précèdent 1 à 5, contenant en tant que polyuréthane modifié par une huile un polyuréthane préparé dans l'huile de lin.

7. Pâtes pigmentaires selon au moins une des revendications qui précèdent 1 à 6, contenant un polyuréthane modifié par une huile qui a une viscosité de 2 000 à 10 000 mPa.s à 23°C, D = 7,3 s⁻¹.

8. Pâtes pigmentaires selon au moins une des revendications 1 à 7, contenant un polyuréthane modifié par une huile à base de toluylènediisocyanate et/ou d'hexaméthylènediisocyanate en tant que composant isocyanate et de pentaérythritol en tant que composant alcool.

9. Procédé pour pigmenter des matières organiques macromoléculaires, caractérisé en ce que l'on utilise une pâte pigmentaire contenant les composants a), b) et c) de la revendication 1.

10. Procédé selon revendication 9, pour la pigmentation de polyuréthanes.
